# EUROPEAN PATENT SPECIFICATION

(11) **EP 3 960 964 B1**
(45) Date of publication and mention of the grant of the patent: **20.12.2023**
(21) Application number: 21193390.8
(22) Date of filing: 26.08.2021
(51) Int. Cl.: E04H 4/00, E04H 4/10

(54) **THERMAL-INSULATION COVER FOR ABOVE-GROUND POOL AND ABOVE-GROUND POOL**
WÄRMEDÄMMENDE ABDECKUNG FÜR OBERIRDISCHES SCHWIMMBECKEN UND OBERIRDISCHES BECKEN
COUVERTURE D'ISOLATION THERMIQUE POUR PISCINE HORS SOL ET PISCINE HORS SOL

(30) Priority: 27.08.2020 CN 202021816743 U
(43) Date of publication of application: 02.03.2022
(73) Proprietor: Bestway Inflatables & Material Corp., Shanghai 201812 (CN)
(72) Inventor: HUANG, Shuiyong, Shanghai 201812 (CN)
(74) Representative: Inchingalo, Simona

(56) References cited:
- US-A- 5 802 630
- US-A- 6 076 201
- US-A1- 2002 108 170
- US-A1- 2011 131 722
- US-A1- 2020 199 899

## Description

### CROSS-REFERENCE TO RELATED APPLICATION

This Application claims priority from Chinese patent Application CN202021816743.3 filed August 27, 2020 in China.

### BACKGROUND

### Technical Field

The present invention relates to the technical field of above-ground pool. In particular, apparatuses and methods consistent with exemplary embodiments of the present invention relate to above-ground pools, and more specifically, to a thermal-insulation cover for an above-ground pool, and an above-ground pool comprising the thermal-insulation cover.

Examples of a thermal insulation cover are disclosed in documents US 2020/199899 or in US 2011/131722. In document US 2020/199899 is disclosed a thermal insulation cover stably fixed to the pool: a layer of such a thermal insulation portion is indeed the internal or external side wall of the pool itself. Document US 2011/131722 shows a thermal jacket to be placed around a spa and covering only the side wall of the spa. Document US 6076201 simply discloses a protective cover for inflatable pools, which is not thermally insulating; such a protective cover gives more structural resistance to the inflatable pool which tends to deform and tear due to water pressure.

### Description of the Related Art

Above-ground pools (such as inflatable pools) are popular with consumers because they are easy to carry and install and are effective to use. Since an above-ground pool is usually used in an outdoor environment, pool pumps for such above-ground pools typically include a heater so that the pool water can be heated to a temperature suitable for a swimmer, particularly when the temperature is low outside. Additionally, certain above-ground pools include a thermal insulation lid and lid liner that cover the top of the pool body and are usually made of polyvinyl chloride (PVC). An above-ground pool may also include a thermal insulation ground mat, disposed under the pool, to increase the thermal insulation.

Unfortunately, such thermal insulation lids, lid liners, and ground mats have no specific insulation structure or insulation material, often resulting in poor thermal insulation, easy dissipation of heat, and high heating energy consumption. In particular, when a swimmer enters a pool, the thermal insulation lid and lid liner must be removed, necessarily reducing the insulation of the pool, and increasing heat loss and energy consumption.

### SUMMARY

Example embodiments may address at least the above problems and/or disadvantages and other disadvantages not described above. Also, example embodiments are not required to overcome the disadvantages described above and may not overcome any of the problems described above.

An object of the present invention is to overcome the defects in the prior art, and to provide a new thermal-insulation cover for an above-ground pool, which thermal-insulation cover may improve the insulation effect of the above-ground pool and also provide energy conservation.

To this end, the present invention provides a cover according to appended claim 1.

A connection between the inner layer and the outer layer, between the thermal-insulation portion and the upper extension, or between the thermal-insulation portion and the lower extension may be at least one of a welded connection, a pasted connection, and a sewn connection.

The intermediate layer may comprise at least of foam, aluminum foil, sponge, and silk wadding.

The cover may further comprise at least one handle attached to an outer circumference of the thermal-insulation sleeve.

According to an aspect of another example embodiment, a pool comprises: a pool bottom and a pool wall; and a thermal-insulation cover, whereby the thermal-insulation cover is a cover according to claim 1.

The pool may further comprise a thermal-insulation lid detachably connected to the thermal-insulation cover and configured to fit over a pool opening defined by a top of the pool wall.

The thermal-insulation cover may further comprise: a plurality of first fasteners disposed on an outside of the thermal-insulation portion, and the thermal-insulation lid comprising a plurality of second fasteners configured to attach with the plurality of first fasteners.

The pool may further comprise a lid liner attached to a bottom of the thermal-insulation lid and configured to fit over the pool opening.

The pool is inflatable.

According to an aspect of another example, which does not form part of the claimed invention, a pool cover may comprise: a sleeve having a substantially cylindrical shape configured to fit around an outer circumference of a pool, the sleeve comprising: an inner sheet; an outer sheet connected to the inner sheet such that an enclosed chamber is formed between the inner sheet and the outer sheet; and a thermally-insulating material disposed in the enclosed chamber; an upper extension extending radially inward from an upper circumference of the sleeve; and a lower extension extending radially inward from a lower circumference of the sleeve.

The enclosed chamber may extend around an entire circumference of the sleeve.

The thermally-insulating material may comprise at least one of foam, aluminum foil, sponge, and silk wadding.

The pool cover may further comprise: at least one handle attached to an outer surface of the outer sheet.

The at least one handle may comprise a plurality of handles evenly spaced around the outer surface of the outer sheet.

The pool cover may further comprise a lid detachably connected to one of the sleeve and the upper extension.

The lid may comprise a lid liner attached to a bottom of the lid.

The pool cover may further comprise at least one first fastener attached thereto, and the lid comprising at least one second fastener configured to detachably connect to the at least one first fastener.

A thermal-insulation cover for an above-ground pool, according to one or more example embodiments described herein may have a plurality of advantages, including, but not limited to: a reduction of the energy consumption of the above-ground pool while playing a good role in heat preservation. For example, in the heating process, the heating efficiency may be high, power consumption may be reduced, and during use, the heat loss may be less, and energy conservation and environmental protection may be achieved. According to one or more example embodiments, a thermal-insulation cover may have a simple structure and a low cost, be convenient to install and suitable for mass production, and may be widely used in any of various types of above-ground pools.

### BRIEF DESCRIPTION OF THE DRAWINGS

The above and/or other aspects and advantages will become apparent and more readily appreciated from the following description of example embodiments, taken in conjunction with the accompanying drawings in which:
FIG. 1 is a schematic diagram of an above-ground pool according to an example embodiment;
FIG. 2 is a partial exploded schematic diagram of the above-ground pool of FIG. 1, showing a thermal insulation lid, a lid liner, a pool body, and a thermal-insulation cover, according to an example embodiment;
FIG. 3 is an exploded schematic diagram of the thermal-insulation cover of FIG. 2, according to an example embodiment; and
FIG. 4 is a cross-sectional schematic diagram of the thermal-insulation cover sleeved on the pool body of FIG. 2, according to an example embodiment.

### DETAILED DESCRIPTION

Reference will now be made in detail to exemplary embodiments which are illustrated in the accompanying drawings, wherein like reference numerals refer to like elements throughout. In this regard, the exemplary embodiments may have different forms and may not be construed as being limited to the descriptions set forth herein.

It will be understood that the terms "include," "including," "comprise," and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list. In addition, the terms such as "unit," "-er (-or)," and "module" described in the specification refer to an element for performing at least one function or operation, and may be implemented in hardware, software, or the combination of hardware and software.

As used herein, directional terms such as "top" and "bottom" are all defined according to the directions in which an above-ground pool is normally used, as shown in the drawings.

Various terms are used to refer to particular system components. Different companies may refer to a component by different names - this document does not intend to distinguish between components that differ in name but not function.

Matters of these example embodiments that are obvious to those of ordinary skill in the technical field to which these exemplary embodiments pertain may not be described here in detail.

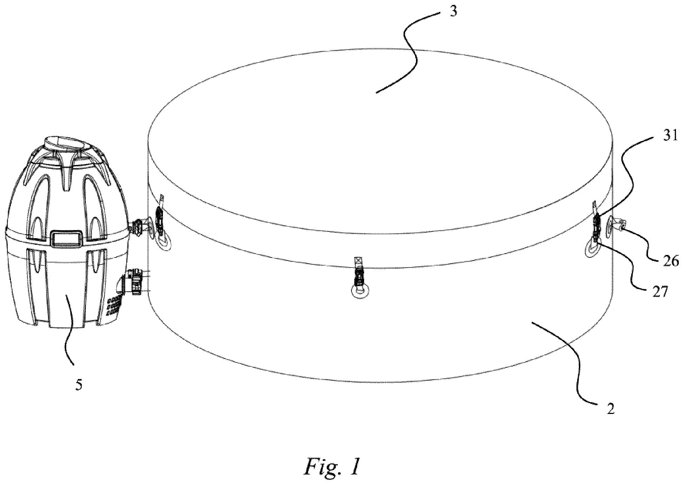

FIGs. 1 through 4 illustrate an above-ground pool and its thermal-insulation cover according to example embodiments. It is noted that the above-ground pool illustrated in the figures and described herein is an inflatable pool. However, example embodiments are not limited to an inflatable pool, and a thermal-insulation cover according to one or more examples can also be applied to any other type of above-ground pool, such as a frame pool, as would be understood by one of skill in the art.

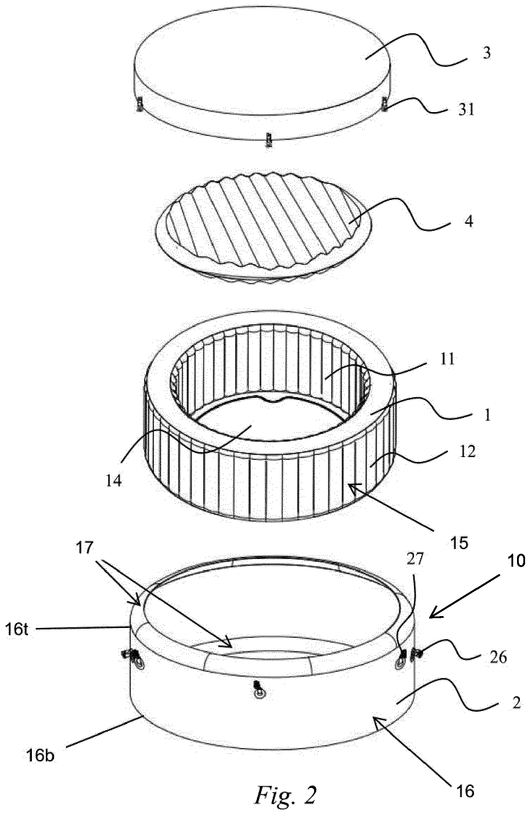

As shown in FIGs. 1 and 2, an inflatable pool comprises a pool body 1, a pool pump 5, and a thermal-insulation structure 10 detachably fixed to a periphery of the pool body 1.

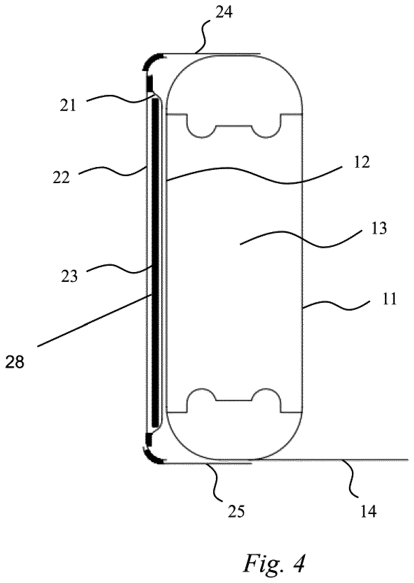

The pool body 1 comprises a pool bottom 14 and an inflatable pool wall 15 coupled to the pool bottom 14. The pool bottom 14 may be formed of a PVC sheet material. If an insulation effect of the pool bottom 14 needs to be increased, the bottom 14 may be designed as a dual layer structure, including one or more insulation materials disposed between the two sheets. For example, one or more insulation materials such as foam, aluminum foil, sponge, and silk wadding may be disposed between two PVC sheets of the bottom 14. The inflatable pool wall comprises, for example, an inner wall 11, formed of the PVC sheet material, an outer wall 12, and a plurality of tension bands 13, as shown in FIG. 4; a top edge of the inner wall 11 is connected to a top edge of the outer wall 12, and a bottom edge of the inner wall 11 is connected to a bottom edge of the outer wall 12, thereby defining an inflatable chamber therebetween. The tension bands 13 are connected to the inner wall 11 and the outer wall 12 to tension the inflatable chamber, thereby preventing excessive expansion of the chamber. The inner wall 11 and the pool bottom 14 define a water injection chamber suitable for containing water.

The pool pump 5 may comprise a filter pump, used to filter impurities from the water, and a gas pump used to inject gas into the water in a water injection chamber, in order to provide a wave function and a massage function. The filter pump provides water circulation by means of a water inlet pipeline and a water outlet pipeline, which are connected to the filter pump and which pass through the inflatable pool wall, and by means of the water injection chamber. The gas pump supplies gas to the water injection chamber by means of a gas inlet pipeline, which is connected to the gas pump and which also passes through the inflatable pool wall.

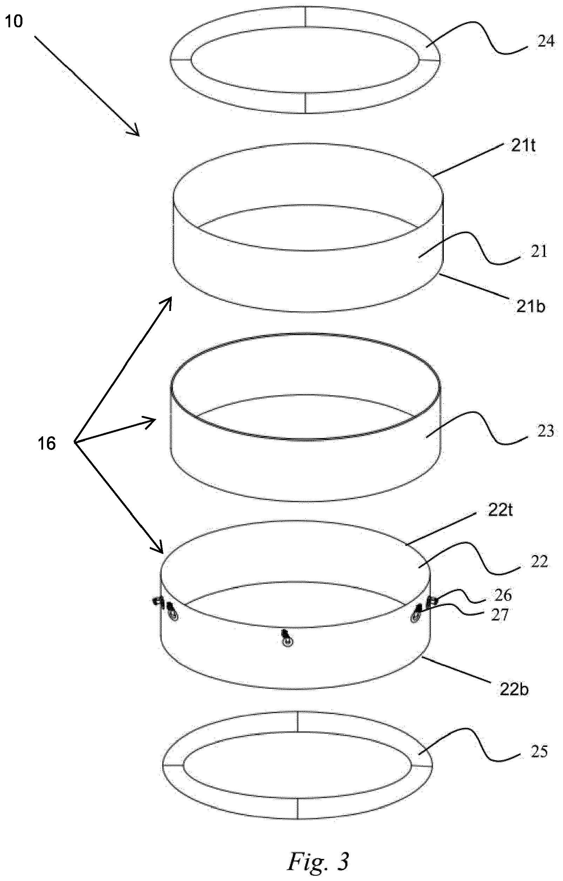

According to an example embodiment of the present invention shown in the attached figures, the thermal-insulation structure 10 of the inflatable pool comprises a thermal-insulation cover 2. As shown in FIGs. 3 and 4, the thermal-insulation cover 2 includes a thermal-insulation portion 16 and an extended portion 17, wherein the thermal-insulation portion 16 is configured to be disposed at a periphery of the pool wall 15, forming a sleeve around the pool wall, in order to prevent heat loss therefrom. The extended portion 17 is connected to the thermal-insulation portion 16 and is configured to be in contact with the top and the bottom of the inflatable pool wall 15.

The thermal-insulation portion 16 may include, for example, an inner layer 21 formed of the PVC sheet material, an outer layer 22, and an intermediate layer 23 made of a thermal-insulation material and arranged between the inner layer 21 and the outer layer 22. An upper edge or top 21t of the inner layer 21 is connected to an upper edge or top 22t of the outer layer 22, and a lower edge or bottom 21b of the inner layer 21 is connected to a lower edge or bottom 22b of the outer layer 22, so as to define an enclosed chamber 28 between the inner layer 21 and the outer layer 22, the enclosed chamber 28 being suitable to be filled with the intermediate layer 23. The intermediate layer 23 may be made of any kind of collapsible thermal-insulation material or materials, such as any one or more of foam, aluminum foil, sponge, silk wadding, and any other material as would be understood by one of skill in the art. The extended portion 17 comprises an upper extension or upper part 24 and a lower extension or lower part 25 which are made of the PVC sheet material. The upper part 24 is annular and is connected to the top of the thermal-insulation portion, that is to an upper circumference 16t of the thermal-insulation portion 16, and is provided to cover the top of the inflatable pool wall. The lower part 25 is also annular and is connected to the bottom of the thermal-insulation portion, that is to a lower circumference 16b of the thermal-insulation portion and is provided around the pool bottom 14 and at the bottom of the inflatable pool wall. Both the upper extension 24 and the lower extension 25 extend radially inward respectively from the upper circumference 16t and the lower circumference 16b of the thermal-insulation portion 16. When the thermal-insulation cover 2 is disposed around the inflatable pool wall 15, and a user wants to move the inflatable pool, due to the support provided to the inflatable pool wall by the lower part 25 of the thermal-insulation cover, the pool body 1 is retained within the bottom of the thermal-insulation cover 2. The inner layer 21 and the outer layer 22 may be connected to each other, for example, by means of at least one of welding, pasting or other adhering, and sewing. The upper part 24 and one or more of the inner layer 21, the outer layer 22, and the intermediate layer 23 may be connected to each other, for example, by means of at least one of welding, pasting or other adhering, and sewing. The lower part 25 and one or more of the inner layer 21, the outer layer 22, and the intermediate layer 23 may be connected to each other, for example, by means of at least one of welding, pasting or other adhering, and sewing.

As shown in FIGs. 1-3, the thermal-insulation cover 2 may further comprise at least one handle 26 arranged on an outside thereof, for example on an outer surface of the outer layer 22, so that a user may move the inflatable pool when the thermal-insulation cover 2 is disposed therearound. The thermal-insulation cover 2 may comprise a plurality of handles 26 arranged on an outer surface of the outer layer 22. Such a plurality of handles 26 may be uniformly spaced around a circumference of the thermal-insulation cover 2.

According to one or more example embodiments of the present invention, when the thermal-insulation cover 2 is disposed around the periphery of the inflatable pool wall of the pool body 1, since the thermal-insulation cover 2 includes a thermal-insulation material layer (e.g. the intermediate layer 23), heat loss from the inflatable pool may be reduced and energy consumption may be reduced. In addition, the thermal-insulation cover 2 does not entirely cover a pool opening defined by the top of the inflatable pool wall, and thus, a user can access the inflatable pool without removing the thermal-insulation cover 2. In this way, the heat preservation and energy saving effect of the thermal-insulation cover 2 is not affected during the use of the inflatable pool.

The thermal-insulation cover 2 can also work in cooperation with a thermal-insulation lid 3, so that both the top and the sides of the inflatable pool are covered by a thermal-insulation layer to further reduce heat loss, and energy consumption can be further reduced in the process of heating and heat preservation of the inflatable pool.

As shown in FIGs. 1 and 2, the thermal-insulation structure 10 of the inflatable pool may further comprise a thermal-insulation lid 3 which is detachably connectable to the thermal-insulation cover 2 to fit over the pool opening defined by the top of the inflatable pool wall. The thermal-insulation cover 2 may comprise a plurality of first fasteners 27, which may be uniformly arranged around an outer circumference of the cover 2, such as being arranged on the outer surface of the outer layer 22. The thermal-insulation lid 3 may also comprise a plurality of second fasteners 31, which may be uniformly arranged around an outer circumference of the lid 3, to be connectable to the first fasteners 27. For example, the first fasteners 27 and the second fasteners 31 may connect to each other in a clamping manner. Of course, the connection method between the thermal-insulation lid 3 and the thermal-insulation cover 2 is not limited to this clamping fit between the first and second fasteners 27 and 31. It should be understood that the thermal-insulation lid 3 and the thermal-insulation cover 2 may be connected to each other by means of any convenient detachable fixing method, such as zipper fit, mushroom buckle fit, or another means that would be understood by one of skill in the art.

As shown in FIG. 2, the inflatable pool may also comprise a lid liner 4 which is fixedly attached or is attachable to the bottom of the thermal-insulation lid 3 to cover the pool opening, so as to further improve the insulation effect of the inflatable pool. The lid liner 4 may be an inflatable structure, for example, and may be attached to the thermal-insulation lid 3 by means of a connecting structure fixed to the thermal-insulation top lid 3.

It may be understood that the exemplary embodiments described herein may be considered in a descriptive sense only and not for purposes of limitation.

While exemplary embodiments have been described with reference to the figures, it will be understood by those of ordinary skill in the art that various changes in form and details may be made therein without departing from the scope of protection of the present invention as defined by the claims.

## Claims

1. A cover (2) for an inflatable pool, the cover comprising:
a thermal-insulation portion (16) configured to fit around an outer wall (12) of the inflatable pool in a sleeved manner and being annular shaped; and
an extended portion (17), comprising:
an upper extension (24), having an annular shape, being connected to an upper circumference (16t) of the thermal-insulation portion (16) and extending radially inward from the upper circumference (16t) of the thermal-insulation portion (16); and
a lower extension (25), having an annular shape, being connected to a lower circumference (16b) of the thermal-insulation portion (16) and extending radially inward from the lower circumference (16b) of the thermal-insulation portion (16),
the thermal-insulation portion (16) comprising:
an inner layer (21);
an outer layer (22) connected to the inner layer (21) at an upper edge (21t) of the inner layer (21) and a lower edge (21b) of the inner layer (21), thereby defining an enclosed chamber (28) between the inner layer and the outer layer; and
an intermediate layer (23) comprising a thermally-insulating material and disposed within the enclosed chamber (28);
wherein the cover (2) is detachably fixable to a periphery external side wall of the inflatable pool.

2. The cover according to claim 1, wherein the enclosed chamber (28) extends around an entire circumference of the thermal-insulation portion (16).

3. The cover according to claim 1, wherein a connection between the inner layer (21) and the outer layer (22), between the thermal-insulation portion (16) and the upper extension (24), or between the thermal-insulation portion (16) and the lower extension (25) is at least one of a welded connection, a pasted connection, and a sewn connection.

4. The cover according to claim 1, wherein the intermediate layer (23) comprises at least of foam, aluminum foil, sponge, and silk wadding.

5. The cover according to claim 1, wherein it further comprises at least one handle (26) attached to an outer circumference of the thermal-insulation portion (16).

6. The cover according to claim 3, wherein it further comprises a plurality of handles (26) evenly spaced around the outer surface of the outer layer (22).

7. The cover according to claim 1, wherein it further comprises a thermal-insulation lid (3) detachably connected to one of the thermal-insulation portion (16) and the upper extension (24).

8. The cover according to claim 7, wherein the thermal-insulation lid (3) comprises a lid liner (4) attached to a bottom of the lid (3).

9. The cover according to claim 7, wherein it further comprises at least one first fastener (27) attached thereto, and the lid (3) comprising at least one second fastener (31) configured to detachably connect to the at least one first fastener (27).

10. An inflatable pool, comprising:
a pool bottom (14) and a pool wall (15); and
a thermal-insulation cover (2), whereby the thermal-insulation cover (2) is a cover according to claim 1.

11. The pool according to claim 10, wherein it further comprises:
a thermal-insulation lid (3) detachably connected to the thermal-insulation cover (2) and configured to fit over a pool opening defined by a top of the pool wall (15).

12. The pool according to claim 11, wherein the thermal-insulation cover (2) further comprises:
a plurality of first fasteners (27) disposed on an outside of the thermal-insulation portion (16), and
the thermal-insulation lid (3) comprising a plurality of second fasteners (31) configured to attach with the plurality of first fasteners (27).

13. The pool according to claim 11, wherein it further comprises a lid liner (4) attached to a bottom of the thermal-insulation lid (3) and configured to fit over the pool opening.

14. The pool according to claim 10, wherein the pool is inflatable.

## Patentansprüche

1. Abdeckung (2) für aufblasbares Schwimmbecken, wobei die Abdeckung Folgendes umfasst:
einen wärmedämmenden Abschnitt (16), der ausgelegt ist, um rund um eine Außenwand (12) des aufblasbaren Schwimmbeckens umhüllend eingepasst zu werden und der ringförmig ausgeformt ist, sowie
einen ausgedehnten Abschnitt (17), der Folgendes umfasst:
eine obere Ausdehnung (24), aufweisend eine ringförmige Form, die mit einem oberen Umfang (16t) des wärmedämmenden Abschnitts (16) verbunden ist und sich radial vom oberen Umfang (16t) des wärmedämmenden Abschnitts (16) nach innen erstreckt, und
eine untere Ausdehnung (25), aufweisend eine ringförmige Form, die mit einem unteren Umfang (16b) des wärmedämmenden Abschnitts (16) verbunden ist und sich vom unteren Umfang (16b) des wärmedämmenden Abschnitts (16) nach innen erstreckt,
wobei der wärmedämmende Abschnitt (16) Folgendes umfasst:
eine Innenschicht (21),
eine Außenschicht (22), die mit der Innenschicht (21) an einer oberen Kante (21t) der Innenschicht (21) und einer unteren Kante (21b) der Innenschicht (21) verbunden ist und dadurch eine umschlossene Kammer (28) zwischen der Innenschicht und der Außenschicht definiert, und
eine Zwischenschicht (23), die ein wärmedämmendes Material umfasst und in der umschlossenen Kammer (28) angeordnet ist,
wobei die Abdeckung (2) abnehmbar an einer umfangseitigen äußeren Seitenwand des aufblasbaren Schwimmbeckens fixierbar ist.

2. Abdeckung nach Anspruch 1, wobei sich die umschlossene Kammer (28) rund um einen vollständigen Umfang des wärmedämmenden Abschnitts (16) erstreckt.

3. Abdeckung nach Anspruch 1, wobei eine Verbindung zwischen der Innenschicht (21) und der Außenschicht (22), zwischen dem wärmedämmenden Abschnitt (16) und der oberen Ausdehnung (24) oder zwischen dem wärmedämmenden Abschnitt (16) und der unteren Ausdehnung (25) mindestens entweder eine Schweißverbindung und/oder eine Klebeverbindung und/oder eine Heftverbindung ist.

4. Abdeckung nach Anspruch 1, wobei die Zwischenschicht (23) mindestens entweder eine Schaum- und/oder eine Aluminiumblech- und/oder eine Schwamm- und/oder eine Seidenfüllmaterial umfasst.

5. Abdeckung nach Anspruch 1, wobei sie zudem mindestens einen Handgriff (26) umfasst, der an einem äußeren Umfang des wärmedämmenden Abschnitts (16) angebracht ist.

6. Abdeckung nach Anspruch 3, wobei sie zudem eine Vielzahl von Handgriffen (26) umfasst, die gleichmäßig rund um die äußere Oberfläche der äußeren Schicht (22) beabstandet sind.

7. Abdeckung nach Anspruch 1, wobei sie zudem einen wärmedämmenden Deckel (3) umfasst, der abnehmbar entweder mit dem wärmedämmenden Abschnitt (16) oder der oberen Ausdehnung (24) verbunden ist.

8. Abdeckung nach Anspruch 7, wobei der wärmedämmende Deckel (3) eine Deckelauskleidung (4) umfasst, die an einer Unterseite des Deckels (3) angebracht ist.

9. Abdeckung nach Anspruch 7, wobei sie zudem mindestens eine erste Befestigungsvorrichtung (27), die daran angebracht ist, umfasst, und der Deckel (3) mindestens eine zweite Befestigungsvorrichtung (31) umfasst, die ausgelegt ist, um mit der mindestens einen ersten Befestigungsvorrichtung (27) abnehmbar verbunden zu werden.

10. Aufblasbares Schwimmbecken, umfassend:
einen Schwimmbeckenboden (14), und
eine Schwimmbeckenwand (15) und eine wärmedämmende Abdeckung (2), wobei es sich bei der wärmedämmenden Abdeckung (2) um eine Abdeckung nach Anspruch 1 handelt.

11. Schwimmbecken nach Anspruch 10, wobei es zudem Folgendes umfasst:
einen wärmedämmenden Deckel (3), der abnehmbar mit der wärmedämmenden Abdeckung (2) verbunden und ausgelegt ist, um über einer Schwimmbeckenöffnung eingepasst zu werden, die durch eine Oberseite der Schwimmbeckenwand (15) definiert ist.

12. Schwimmbecken nach Anspruch 11, wobei die wärmedämmende Abdeckung (2) zudem Folgendes umfasst:
eine Vielzahl von ersten Befestigungsvorrichtungen (27), die auf einer Außenseite des wärmedämmenden Abschnitts (16) angeordnet sind, und
den wärmedämmenden Deckel (3), der eine Vielzahl von zweiten Befestigungsvorrichtungen (31) umfasst, die ausgelegt sind, um mit der Vielzahl von ersten Befestigungsvorrichtungen (27) angebracht zu werden.

13. Schwimmbecken nach Anspruch 11, wobei es zudem eine Deckelauskleidung (4) umfasst, die an einer Unterseite des wärmedämmenden Deckels (3) angebracht und ausgelegt ist, um über der Schwimmbeckenöffnung eingepasst zu werden.

14. Schwimmbecken nach Anspruch 10, wobei das Schwimmbecken aufblasbar ist.

## Revendications

1. Couverture (2) pour une piscine gonflable, la couverture comprenant :
une portion d'isolation thermique (16) configurée pour s'adapter autour d'une paroi extérieure (12) de la piscine gonflable de manière manchonnée et ayant une forme annulaire ; et
une portion étendue (17), comprenant :
une extension supérieure (24), ayant une forme annulaire, étant reliée à une circonférence supérieure (16t) de la portion d'isolation thermique (16) et
s'étendant radialement vers l'intérieur à partir de la circonférence supérieure (16t) de la portion d'isolation thermique (16) ; et
une extension inférieure (25), ayant une forme annulaire, étant reliée à une circonférence inférieure (16b) de la portion d'isolation thermique (16) et
s'étendant radialement vers l'intérieur à partir de la circonférence inférieure (16b) de la portion d'isolation thermique (16),
la portion d'isolation thermique (16) comprenant :
une couche intérieure (21) ;
une couche externe (22) reliée à la couche interne (21) au niveau d'un bord supérieur (21t) de la couche interne (21) et d'un bord inférieur (21b) de la couche interne (21), définissant ainsi une chambre fermée (28) entre la couche interne et la couche externe ; et
une couche intermédiaire (23), comprenant un matériau thermiquement isolant et disposée à l'intérieur de la chambre fermée (28) ;
dans laquelle la couverture (2) peut être fixée de manière amovible à une paroi latérale externe périphérique de la piscine gonflable.

2. Couverture selon la revendication 1, dans laquelle la chambre fermée (28) s'étend sur toute la circonférence de la portion d'isolation thermique (16).

3. Couverture selon la revendication 1, dans laquelle une connexion entre la couche interne (21) et la couche externe (22), entre la portion d'isolation thermique (16) et l'extension supérieure (24), ou entre la portion d'isolation thermique (16) et l'extension inférieure (25) est au moins l'une d'une connexion soudée, d'une connexion collée et d'une connexion cousue.

4. Couverture selon la revendication 1, dans laquelle la couche intermédiaire (23) comprend au moins de la mousse, de la feuille d'aluminium, de l'éponge et de la ouate de soie.

5. Couverture selon la revendication 1, dans laquelle elle comprend en outre au moins une poignée (26) fixée à une circonférence extérieure de la portion d'isolation thermique (16).

6. Couverture selon la revendication 3, dans laquelle elle comprend en outre une pluralité de poignées (26) régulièrement espacées autour de la surface extérieure de la couche extérieure (22).

7. Couverture selon la revendication 1, dans laquelle elle comprend en outre un couvercle d'isolation thermique (3) relié de manière amovible à l'une de la portion d'isolation thermique (16) et de l'extension supérieure (24).

8. Couverture selon la revendication 7, dans laquelle le couvercle d'isolation thermique (3) comprend un revêtement de couvercle (4) fixé à un fond du couvercle (3) .

9. Couverture selon la revendication 7, dans laquelle elle comprend en outre au moins une première attache (27) fixée à celle-ci, et le couvercle (3) comprenant au moins une deuxième attache (31) configurée pour se connecter de manière amovible à ladite au moins une première attache (27).

10. Piscine gonflable, comprenant :
un fond de piscine (14) et une paroi de piscine (15) ; et
une couverture d'isolation thermique (2), la couverture d'isolation thermique (2) étant une couverture selon la revendication 1.

11. Piscine selon la revendication 10, dans laquelle elle comprend en outre :
un couvercle d'isolation thermique (3) relié de manière amovible à la couverture d'isolation thermique (2) et configuré pour s'adapter sur une ouverture de piscine définie par un sommet de la paroi de piscine (15).

12. Piscine selon la revendication 11, dans laquelle la couverture d'isolation thermique (2) comprend en outre : une pluralité de premières attaches (27) disposées sur l'extérieur de la portion d'isolation thermique (16), et le couvercle d'isolation thermique (3) comprenant une pluralité de deuxièmes attaches (31) configurées pour se fixer avec la pluralité de premières attaches (27).

13. Piscine selon la revendication 11, dans laquelle elle comprend en outre un revêtement de couvercle (4) fixée à un fond du couvercle d'isolation thermique (3) et configurée pour s'adapter sur l'ouverture de la piscine.

14. Piscine selon la revendication 10, dans laquelle la piscine est gonflable.
